# EUROPÄISCHE PATENTSCHRIFT

(11) **EP 2 646 289 B1**
(45) Veröffentlichungstag und Bekanntmachung des Hinweises auf die Patenterteilung: **15.07.2015**
(21) Anmeldenummer: 11784427.4
(22) Anmeldetag: 12.11.2011
(51) Int. Cl.: B60R 22/34

(54) **GURTAUFROLLER MIT EINER SCHALTBAREN KRAFTBEGRENZUNGSEINRICHTUNG FÜR EINEN SICHERHEITSGURT EINES KRAFTFAHRZEUGES**
BELT RETRACTOR WITH A SWITCHABLE FORCE-LIMITING DEVICE FOR A SEATBELT OF A MOTOR VEHICLE
ENROULEUR DE CEINTURE DOTÉ D'UN LIMITEUR DE FORCE ENCLENCHABLE POUR CEINTURE DE SÉCURITÉ DE VÉHICULE AUTOMOBILE

(30) Priorität: 02.12.2010 DE 102010053041
(43) Veröffentlichungstag der Anmeldung: 09.10.2013
(73) Patentinhaber: Autoliv Development AB, 447 83 Vårgårda (SE)
(72) Erfinder: CLUTE, Günter, 25336 Elmshorn (DE); BUD, Adrian, S-516 31 Dalsjöfors (SE); AXBLOM, Per, S-441 57 Alingsås (SE); SANDELIUS, Lena, S-438 35 Landvetter (SE)
(74) Vertreter: Müller Verweyen
(86) Internationale Anmeldenummer: PCT/EP2011/005710
(87) Internationale Veröffentlichungsnummer: WO 2012/072194

(56) Entgegenhaltungen:
- DE-A1- 19 927 427
- DE-A1-102007 021 620
- DE-C1- 19 780 583

## Beschreibung

Die Erfindung betrifft einen Gurtaufroller mit einer schaltbaren Kraftbegrenzungseinrichtung für einen Sicherheitsgurt eines Kraftfahrzeuges mit den Merkmalen des Oberbegriffs von Anspruch 1.

Ein gattungsgemäßer Gurtaufroller mit einer schaltbaren Kraftbegrenzungseinrichtung ist zum Beispiel aus der DE 199 27 427 A1 bekannt. Die Kraftbegrenzungseinrichtung ist durch einen Torsionsstab mit zwei Abschnitten mit unterschiedlichem Durchmesser gebildet, welche durch eine Schalteinrichtung wahlweise in den Kraftfluss zwischen einer Gurtwelle und einer die Gurtwelle in Auszugsrichtung blockierenden Blockiereinrichtung geschaltet werden können. Je nachdem, ob der Abschnitt des Torsionsstabes mit dem größeren Durchmesser oder der Abschnitt mit dem kleineren Durchmesser zwischen der Gurtwelle und der Blockiereinrichtung wirkt, ergibt sich dann eine hohe Gurtauszugskraft oder eine niedrigere Gurtauszugskraft. Die Abschnitte des Torsionsstabes werden durch ein Vielzahnprofil voneinander getrennt, über das der Torsionsstab mit der Gurtwelle über eine Torsionshülse koppelbar ist. Die Torsionshülse wiederum ist über mehrere Klinken an die Gurtwelle angekoppelt, welche durch einen Wellenring in der Eingriffsstellung mit der Torsionshülse gehalten werden. Die Schalteinrichtung ist durch einen pyrotechnisch antreibbaren, verschiebbaren Kolben gebildet, welcher bei einer Aktivierung der Schalteinrichtung den Wellenring verschiebt, so dass die Klinken außer Eingriff mit der Torsionshülse gelangen und der Kraftfluss zwischen der Gurtwelle und der Torsionshülse unterbrochen wird.

Aus der US 6,616,081 B1 ist ferner ein baugleicher Gurtaufroller bekannt, bei dem der Wellenring an einem drehbaren Ring mit einer axial gerichteten Rampenkontur anliegt, welcher bei einer Aktivierung der Schalteinrichtung durch einen mittels eines Gasdruckes antreibbaren Kolben verdreht wird und den Wellenring durch das Abgleiten der Rampenkontur axial verschiebt.

Der antreibbare Kolben begrenzt jeweils einen Druckraum, der bei einer Aktivierung der Schalteinrichtung mit einem unter einem sehr hohen Druck stehenden Gasstrom beaufschlagt wird, welcher wiederum den Kolben antreibt.

Ein Nachteil dieser Lösungen ist es, dass der unter Druck stehende Gasstrom nach außen austreten kann, wenn der Kolben aus dem Druckraum austritt oder der Druckraum nicht vollständig durch den Kolben abgedichtet ist. Durch den austretenden Gasdruck können angrenzende Bauteile beschädigt oder bei Verwendung eines pyrotechnischen Gasgenerators mit einem sehr heißen Gasstrom sogar in Brand gesetzt werden.

Aufgabe der Erfindung ist es, einen Gurtaufroller mit einer schaltbaren Kraftbegrenzungseinrichtung der gattungsgemäßen Art bereitzustellen, bei dem sicher verhindert wird, dass der den Kolben antreibende Gasstrom aus dem Druckraum nach außen austritt.

Die Aufgabe der Erfindung wird durch einen Gurtaufroller mit den Merkmalen von Anspruch 1 gelöst. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass der Kolben an einem aufweitbaren, hohlen Topf angeordnet ist, welcher gasdicht an den Gasgenerator angeschlossen ist und den Druckraum bildet. Durch die vorgeschlagene Verwendung des aufweitbaren Topfes wird der mit dem Gasstrom beaufschlagte Druckraum gasdicht gegenüber der Umgebung gekapselt, so dass sicher verhindert werden kann, dass der unter Druck stehende Gasstrom nach außen austritt. Ferner wird dadurch eine einfach zu montierende Einheit geschaffen, welche bereits alle zur Aktivierung der Schalteinrichtung benötigten Bauteile umfasst. Ein weiterer Vorteil der Erfindung kann darin gesehen werden, dass der Kolben selbst nicht mehr gasdicht geführt werden muss, und in dem Gurtaufroller kein gesondert abzudichtender Druckraum mehr geschaffen werden muss. Weiterhin wird der konstruktive Aufbau als solches vereinfacht, da ein separates Teil, nämlich der Kolben, entfallen kann, indem die Stirnseite des Topfes gleichzeitig die Funktion des Kolbens übernimmt und die Stellbewegung zur Schaltung der Kraftbegrenzungseinrichtung überträgt.

Die Erfindung wird im Folgenden anhand einer bevorzugten Ausführungsform unter Bezugnahme auf die beigefügten Figuren erläutert. Dabei zeigt:
- Fig.1:: Gurtaufroller mit einer schaltbaren Kraftbegrenzungseinrichtung;
- Fig.2:: Schalteinrichtung vor der Aktivierung;
- Fig.3:: Einheit aus Gasgenerator und einem den Druckraum bildenden gasdicht angeschlossenen Topf;
- Fig.4:: Schalteinrichtung nach der Aktivierung.

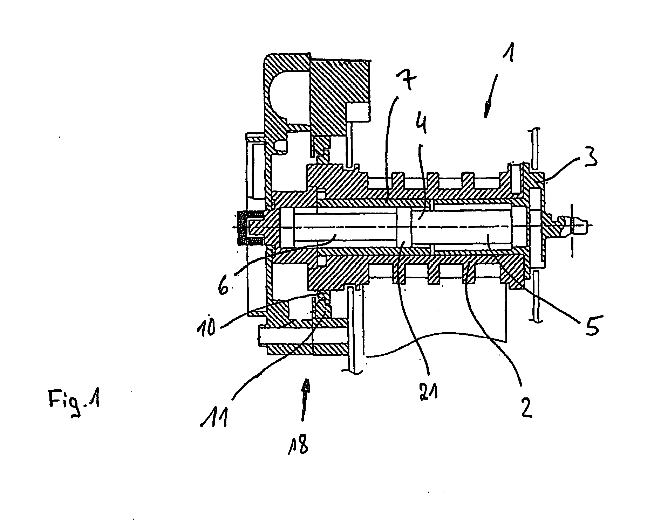

In der Figur 1 ist beispielhaft ein Gurtaufroller 1 mit einer Blockiereinrichtung 3, gebildet durch eine an einem Profilkopf gelagerte Sperrklinke, zu erkennen. Die Blockiereinrichtung 3 blockiert die Drehbewegung der Gurtwelle 2 in Gurtauszugsrichtung in bekannter Weise bei einem Überschreiten vorbestimmter Gurtbandauszugsbeschleunigungswerte oder Fahrzeugverzögerungswerte durch Einsteuerung der Sperrklinke in eine fahrzeugfeste Verzahnung in dem Rahmen des Gurtaufrollers 1. In dem Kraftfluss zwischen der Gurtwelle 2 und der Blockiereinrichtung 3 ist eine schaltbare Kraftbegrenzungseinrichtung 4 in Form eines Torsionsstabes 4 mit einem ersten Abschnitt 5 mit einem großen Durchmesser und einem zweiten Abschnitt 6 mit einem kleineren Durchmesser angeordnet. Der erste Abschnitt 5 und der zweite Abschnitt 6 sind durch einen Profilabschnitt 21 voneinander getrennt, welcher in der Anfangsstellung der Kraftbegrenzungseinrichtung 4 über eine Torsionshülse 7 und nicht zu erkennende Klinken mit der Gurtwelle 2 verbunden ist. Damit wirkt zu Beginn der Aktivierung der Kraftbegrenzungseinrichtung 4 der erste Abschnitt 5 mit dem durch den größeren Durchmesser definierten höheren Kraftbegrenzungsniveau. Zum Schalten der schaltbaren Kraftbegrenzungseinrichtung 4 ist eine Schalteinrichtung 18 vorgesehen, welche einen Wellenring 10 umfasst, der die nicht dargestellten Klinken zwischen der Torsionshülse 7 und der Gurtwelle 2 in der Eingriffsstellung hält. Ferner ist ein drehbarer Schaltring 11 vorgesehen, der an dem Wellenring 10 über eine nicht dargestellte Rampenkontur axial anliegt. Zum Schalten der Kraftbegrenzungseinrichtung 4 wird der Schaltring 11 geringfügig verdreht, so dass der Wellenring 10 axial verschoben wird, wodurch wiederum die Klinken aus der Eingriffsstellung herausschwenken können und die Verbindung zwischen der Gurtwelle 2 und der Torsionshülse 7 aufgehoben wird. Aufgrund der aufgehobenen Verbindung wirkt ab diesem Zeitpunkt der zweite Abschnitt 6 mit dem kleineren Durchmesser, und das Kraftbegrenzungsniveau ist entsprechend niedriger. Insoweit entspricht der Gurtaufroller in seinem Aufbau dem aus der DE 199 27 427 A1 oder der US 6,616,081 B1 bekannten Gurtaufroller, welche zum Verständnis der vorliegenden Erfindung ausdrücklich zum Offenbarungsgehalt dieser Anmeldung hinzuzurechnen sind.

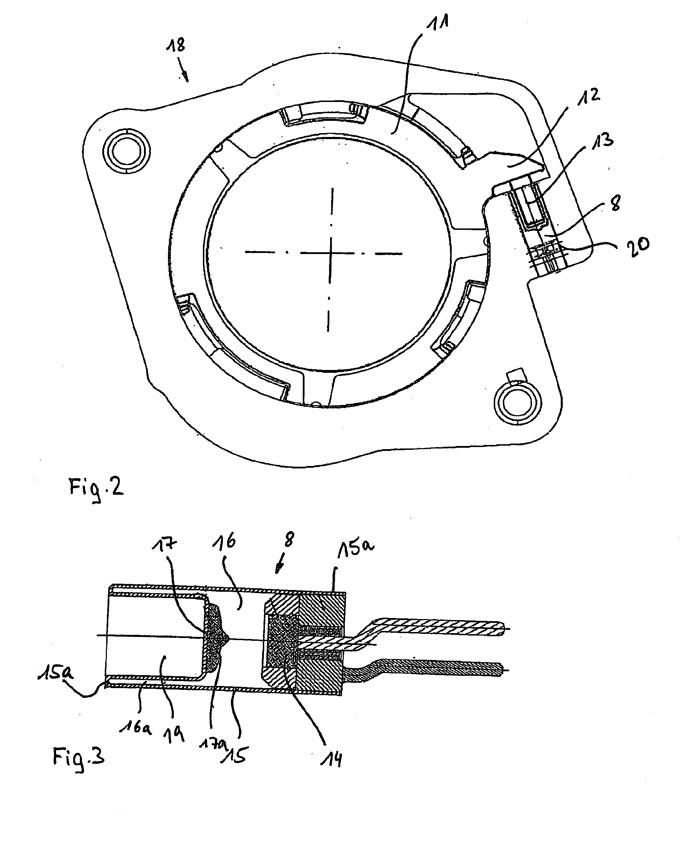

In der Figur 2 ist die erfindungsgemäß weiterentwickelte Schalteinrichtung 18 mit einem Aktuator 8 zu erkennen, welcher in einer Aufnahme 20 an dem Gurtaufroller 1 angeordnet ist. Der Aktuator 8 ist in der Figur 3 vergrößert dargestellt und umfasst einen Gasgenerator 14, an den ein Topf 15 gasdicht angeschlossen ist. Der Topf 15 umfasst den Gasgenerator 14 randseitig mit einem Abschnitt 15a, welcher in der Montagestellung des Aktuators 8 zwischen dem Gasgenerator 14 und der Innenwand der Aufnahmen 20 eingeklemmt ist. Der Topf 15 ist gasdicht an dem Gasgenerator 14 gehalten und kann sich auch unter höheren wirkenden Gasdrücken nicht von dem Gasgenerator 14 lösen. Die gasdichte Verbindung zwischen dem Topf 15 und dem Gasgenerator 14 kann z.B. durch eine Klebe- oder Crimpverbindung bewirkt werden, welche durch das Einklemmen des Abschnitts 15a unterstützt wird. Der Topf 15 ist hohl ausgeführt und bildet damit den Druckraum 16, welcher durch den Topf 15 selbst und den gasdichten Anschluss an den Gasgenerator 14 nach außen hermetisch dicht abgeschlossen ist. Die Stirnseite 17 ist nach innen in den Druckraum 16 gefaltet, so dass ein zweiter von außen zugänglicher Hohlraum 19 geschaffen und das Volumen des Druckraumes 16 gleichzeitig verkleinert wird. An der Stirnseite 17 ist eine spitz vorstehende Verdickung 17a vorgesehen, durch die der von dem Gasgenerator 14 erzeugte Gasstrom seitlich in den durch die nach innen gefaltete Stirnseite 17 gebildeten Ringraum 16a geleitet wird. Der Topf 15 ist durch die nach innen gefaltete Stirnseite 17 teleskopierbar ausgebildet, wodurch der Topf 15 aufweitbar ist, ohne selbst elastisch zu sein. Dadurch kann mit einem sehr kleinen Topf 15 eine im Verhältnis zu der Größe des Topfes 15 große Aufweitbewegung erzielt werden. Der Topf 15 selbst kann aus einem dünnen Stahlblech von vorzugsweise 0,3 bis 0,6 mm gefertigt werden, so dass er die nötige Festigkeit aufweist, um dem Druck des erzeugten Gasstromes auch im aufgeweiteten Zustand Stand zu halten. Ferner weist er dadurch die nötige Festigkeit zur Übertragung der erforderlichen auf den Schaltring 11 zu übertragenden Stellkräfte auf.

Wie in der Figur 2 zu erkennen ist, ist an dem Schaltring 11 ein radial abstehender Arm 12 vorgesehen, von dem ein in Richtung des Aktuators 8 gerichteter zylinderförmiger Vorsprung 13 abragt. Der Vorsprung 13 ragt in den Hohlraum 19 und liegt außenseitig an der Stirnseite 17 des Topfes 15 an, so dass der Schaltring 11 durch die beginnende Aufweitbewegung des Topfes 15 unmittelbar zu der die Schaltbewegung des Wellenringes 10 erzwingenden Drehbewegung angetrieben wird. Durch den in den Hohlraum 19 ragenden Vorsprung 13 kann der Drehwinkel des Schaltringes 11 vergrößert werden, da der von dem Aktuator 8 auf den Arm 12 wirkende Hub eben um die Länge des in den Hohlraum 19 ragenden Vorsprunges 13 vergrößert wird. Der Vorsprung 13 muss dazu nicht direkt an der Stirnseite 17 anliegen, wobei die Anlage des Vorsprunges 13 aber insofern bevorzugt ist, da hierdurch die zu bewirkende Schaltbewegung maximiert werden kann und außerdem mögliche Impulskräfte minimiert werden können.

Da der von dem Gasgenerator 14 erzeugte Gasstrom durch die spitze Verdickung 17a in den Ringraum 16a geleitet wird, kann der treibende auf die Falte 15a des Topfes 15 wirkende Druck zudem vergrößert und die Aufweitbewegung des Topfes 15 entsprechend beschleunigt werden. Außerdem bewirkt die Verdickung 17a eine Versteifung der Stirnseite 17 des Topfes 15, so dass die Aufweitbewegung des Topfes 15 im Wesentlichen durch das Abrollen der Falte 15a und das Ausfahren der Stirnseite 17 des Topfes 15 bewirkt wird, ohne dass sich die Stirnseite 17 dabei nennenswert verformt.

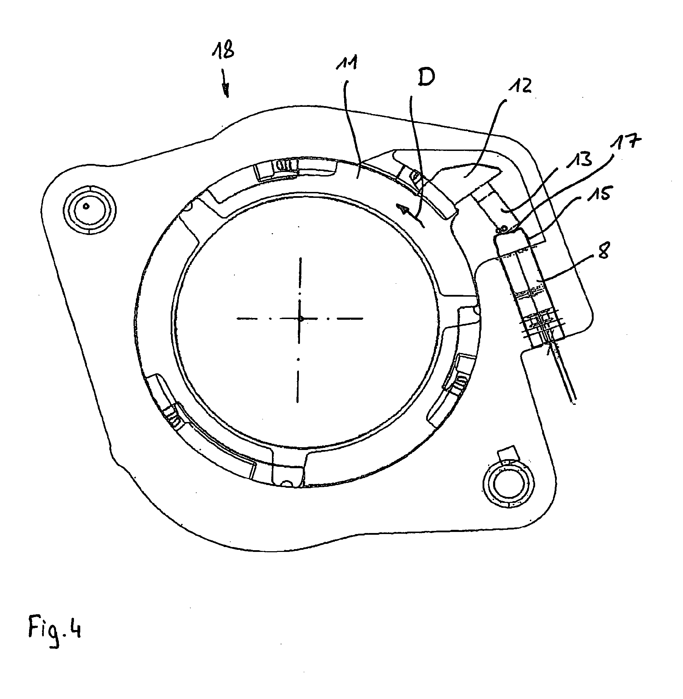

In der Figur 4 ist der Aktuator 8 in der Stellung nach dem Aufweiten des Topfes 15 zu erkennen. Der Topf 15 wurde durch die Aktivierung des Gasgenerators 14 soweit aufgeweitet, dass die Stirnseite 17 des Topfes 15 aus der Aufnahme 20 ausgetreten ist und dabei den Schaltring 11 in Drehrichtung D verdreht hat. Die Drehbewegung des Schaltringes 11 wurde dann in gleicher Weise zur Schaltung der Kraftbegrenzungseinrichtung 4 genutzt, wie das bereits in der US 6,616,081 B1 beschrieben wurde. Als bevorzugte Gasgeneratoren 14 können Kaltgasgeneratoren verwendet werden, wodurch die thermische Beanspruchung des Topfes 15 zum einen verringert werden kann und zum anderen verhindert werden kann, dass bei ungewollt entstehenden Undichtigkeiten eine heiße Flamme austritt.

## Patentansprüche

1. Gurtaufroller (1) mit einer schaltbaren Kraftbegrenzungseinrichtung (4) für einen Sicherheitsgurt eines Kraftfahrzeuges mit:
- einer Gurtwelle (2) und einer die Gurtwelle (2) bei einer Ansteuerung in Gurtauszugsrichtung blockierenden Blockiereinrichtung (3), wobei die Kraftbegrenzungseinrichtung (4) im Kraftfluss zwischen der Gurtwelle (1) und der Blockiereinrichtung (3) angeordnet ist, und
- einer Schalteinrichtung (18) zur Schaltung der Kraftbegrenzungseinrichtung (4), welche einen Gasgenerator (14) zur Freisetzung eines Gasstromes in einen Druckraum (16) und einen durch den Gasstrom antreibbaren Kolben aufweist, **dadurch gekennzeichnet, dass**
- der Kolben an einem aufweitbaren, hohlen Topf (15) angeordnet ist, welcher gasdicht an den Gasgenerator (14) angeschlossen ist und den Druckraum (16) bildet.

2. Gurtaufroller (1) nach Anspruch 1, **dadurch gekennzeichnet, dass** der aufweitbare Topf (15) teleskopierbar ist.

3. Gurtaufroller (1) nach Anspruch 1 oder 2, **dadurch gekennzeichnet, dass** der Topf (15) vor der Aktivierung des Gasgenerators (14) mit seiner Stirnseite (17) nach innen zu einem von außen zugänglichen Hohlraum (19) gefaltet ist, und die Schalteinrichtung (18) einen Vorsprung (19) aufweist, welcher in den Hohlraum (19) hineinragt.

4. Gurtaufroller (1) nach einem der vorangegangenen Ansprüche, **dadurch gekennzeichnet, dass** der Gasgenerator (14) in einer Aufnahme (20) angeordnet ist, und der Topf (15) durch eine zwischen dem Gasgenerator (14) und der Aufnahme (20) festgeklemmte Wandung (15a) gasdicht an den Gasgenerator (14) angeschlossen ist.

5. Gurtaufroller (1) nach einem der vorangegangenen Ansprüche, **dadurch gekennzeichnet, dass** der Topf (15) aus einem dünnen Stahlblech mit einer Wandstärke von 0,3 bis 0,6 mm gebildet ist.

6. Gurtaufroller (1) nach einem der vorangegangenen Ansprüche, **dadurch gekennzeichnet, dass** der Kolben durch die Stirnseite (17) des Topfes (15) gebildet ist.

7. Gurtaufroller (1) nach einem der vorangegangenen Ansprüche, **dadurch gekennzeichnet, dass** der Topf (15) an seiner Stirnseite (17) eine Verdickung (17a) aufweist.

8. Gurtaufroller (1) nach einem der vorangegangenen Ansprüche, **dadurch gekennzeichnet, dass** die Schalteinrichtung (18) einen drehbaren Schaltring (11) umfasst, welcher einen radial abstehenden Arm (12) aufweist, an dem der Kolben (15) tangential zu der Drehrichtung (D) des Schaltringes (11) anliegt.

9. Gurtaufroller (1) nach einem der vorangegangenen Ansprüche, **dadurch gekennzeichnet, dass** der Gasgenerator (14) ein Kaltgasgenerator ist.

## Claims

1. A seatbelt retractor (1) having a switchable force-limiting device (4) for a seatbelt of a motor vehicle including:
- a belt shaft (2) and a locking device (3) locking the belt shaft (2) in the belt extraction direction upon an activation, wherein the force-limiting device (4) is disposed in the force flow between the belt shaft (1) and the locking device (3), and
- a switching device (18) for switching the force-limiting device (4), which force-limiting device (4) includes a gas generator (14) for releasing a gas flow into a pressure chamber (16) and a piston activatable by the gas flow, **characterised in that**
- the piston is disposed on an expandable, hollow pot (15) that is connected gas-tight to the gas generator (14) and forms the pressure chamber (16).

2. The belt retractor (1) according to claim 1, **characterised in that** the expandable pot (15) is telescopable.

3. The belt retractor (1) according to claim 1 or 2, **characterised in that** the end side (17) of the pot (15) is folded inward toward a hollow chamber (19), which hollow chamber (19) is externally accessible, prior to activation of the gas generator (17), and the switching device (18) includes a projection (19) that projects into the hollow chamber (19).

4. The belt retractor (1) according to one of the preceding claims, **characterised in that** the gas generator (14) is disposed in a recess (20) and the pot (15) is connected gas-tight to the gas generator (14) by a wall (15a) clamped between the gas generator (14) and the recess (20).

5. The belt retractor (1) according to one of the preceding claims, **characterised in that** the pot (15) is formed from a thin sheet steel having a wall thickness of 0.3 to 0.6 mm.

6. The belt retractor (1) according to one of the preceding claims, **characterised in that** the piston is formed by the end side (17) of the pot (15).

7. The belt retractor (1) according to one of the preceding claims, **characterised in that** the pot (15) has a thickness (17a) on its end side (17).

8. The belt retractor (1) according to one of the preceding claims, **characterised in that** the switching device (18) includes a rotatable shifting ring (11), which shifting ring (11) includes a radially protruding arm (12) on which the piston (15) abuts tangential to the direction of rotation (D) of the shifting ring (11).

9. The belt retractor (1) according to one of the preceding claims, **characterised in that** the gas generator (14) is a cold gas generator.

## Revendications

1. Enrouleur de ceinture (1) doté d'un limiteur de force (4) enclenchable pour ceinture de sécurité de véhicule automobile, comprenant :
- un axe de ceinture (2) et un dispositif de blocage (3) qui bloque l'axe de ceinture (2) dans la direction de déroulement de la ceinture lors d'un actionnement, le limiteur de force (4) étant disposé dans le flux de force entre l'axe de ceinture (1) et le dispositif de blocage (3), et
- un dispositif d'enclenchement (18) destiné à enclencher le limiteur de force (4), qui comporte un générateur de gaz (14) destiné à libérer un flux de gaz dans une chambre de pression (16) et un piston pouvant être entraîné par le flux de gaz,
**caractérisé en ce que**
- le piston est disposé sur un pot (15) creux extensible, qui est raccordé au générateur de gaz (14) de manière étanche aux gaz et qui forme la chambre de pression (16).

2. Enrouleur de ceinture (1) selon la revendication 1, **caractérisé en ce que** le pot (15) extensible est télescopique.

3. Enrouleur de ceinture (1) selon la revendication 1 ou 2, **caractérisé en ce que** le pot (15), avant l'activation du générateur de gaz (14), est plié avec sa face frontale (17) vers l'intérieur en formant une cavité (19) accessible de l'extérieur, et le dispositif d'enclenchement (18) comporte une saillie (19) qui dépasse dans la cavité (19).

4. Enrouleur de ceinture (1) selon l'une des revendications précédentes, **caractérisé en ce que** le générateur de gaz (14) est disposé dans un logement (20), et le pot (15) est raccordé au générateur de gaz (14) de manière étanche aux gaz par une paroi (15a) coincée entre le générateur de gaz (14) et le logement (20).

5. Enrouleur de ceinture (1) selon l'une des revendications précédentes, **caractérisé en ce que** le pot (15) est formé à partir d'une tôle d'acier mince avec une épaisseur de paroi de 0,3 à 0,6 mm.

6. Enrouleur de ceinture (1) selon l'une des revendications précédentes, **caractérisé en ce que** le piston est formé par la face frontale (17) du pot (15).

7. Enrouleur de ceinture (1) selon l'une des revendications précédentes, **caractérisé en ce que** le pot (15) comporte un épaississement (17a) sur sa face frontale (17).

8. Enrouleur de ceinture (1) selon l'une des revendications précédentes, **caractérisé en ce que** le dispositif d'enclenchement (18) comprend un anneau d'enclenchement (11) rotatif, qui comporte un bras (12) dépassant radialement, auquel le piston (15) est adjacent, tangentiellement au sens de rotation (D) de l'anneau d'enclenchement (11).

9. Enrouleur de ceinture (1) selon l'une des revendications précédentes, **caractérisé en ce que** le générateur de gaz (14) est un générateur de gaz froid.
